Europäisches Patentamt

European Patent Office

Office européen des brevets

(19)

(11) Veröffentlichungsnummer : **0 033 465**
**B2**

(12) **NEUE EUROPÄISCHE PATENTSCHRIFT**

(45) Veröffentlichungstag der neuen Patentschrift :
15.04.87

(21) Anmeldenummer : 81100385.4

(22) Anmeldetag : 20.01.81

(51) Int. Cl.⁴ : **C 25 D 13/06, C 25 D 15/00,
C 09 D 3/48, C 09 D 5/38**

(54) **Verfahren zur Herstellung eines Gegenstandes bestehend aus einem elektrisch leitfähigen Substrat und einem darauf festhaftend angeordneten metallisch aussehenden Überzug.**

(30) Priorität : 30.01.80 DE 3003286

(43) Veröffentlichungstag der Anmeldung :
12.08.81 Patentblatt 81/32

(45) Bekanntmachung des Hinweises auf die Patenterteilung : 21.09.83 Patentblatt 83/38

(45) Bekanntmachung des Hinweises auf die Entscheidung über den Einspruch : 15.04.87 Patentblatt 87/16

(84) Benannte Vertragsstaaten :
AT BE CH DE FR GB IT LI NL SE

(56) Entgegenhaltungen :
DE-A- 2 057 799
DE-A- 2 611 857
DE-A- 2 611 857
DE-A- 2 637 066
DE-A- 2 637 066
DE-A- 2 753 595
DE-B- 2 263 520
DE-C- 2 249 378
Farbe und Lack, 72, 1966, S. 218-224
Farbe und Lack, 73, 1967, S. 298-309

(73) Patentinhaber : BASF Lacke + Farben Aktiengesellschaft
Max-Winkelmann-Strasse 80
D-4400 Münster (DE)

(72) Erfinder : Diefenbach, Horst, Dr.
Lerchenhain 8
D-4405 Nottuln (DE)
Erfinder : Hoppe, Karl, Dr.
Im Hain 15
D-4400 Münster (DE)
Erfinder : Kachel, Heinz
Berliner Strasse 60
D-4435 Horstmar (DE)
Erfinder : Strauss, Udo, Dr.
Wüllnerstrasse 16
D-4400 Münster (DE)

(74) Vertreter : Habbel, Hans-Georg, Dipl.-Ing.
Postfach 3429 Am Kanonengraben 11
D-4400 Münster (DE)

EP 0 033 465 B2

## Beschreibung

Die Erfindung bezieht sich auf ein Verfahren zum Herstellen eines Gegenstandes bestehend aus einem elektrisch leitfähigen Substrat und einem darauf festhaftend angeordneten metallisch aussehenden Überzug aus einer Metallpulver enthaltenden Kunstharzschicht, wobei die das Metallpulver enthaltende Kunstharzschicht durch kataphoretische Abscheidung von Metallpulver gemeinsam mit einem kationischen Filmbildner aus einem das Metallpulver und den Filmbildner in protonisierter Form enthaltenden wäßrigen Elektrotauchbad auf das in das Elektrotauchbad eingetauchte und als Kathode geschaltete Substrat hergestellt wird.

Metallisch aussehende Lackierungen sind weit verbreitet. So finden sogenannte Metallic-Lackierungen wachsendes Interesse. Auch Zubehörteile von Fahrzeugen, z. B. Räder, erhalten vielfach einen metallisch aussehenden Überzug. Der Lackierung wird das metallische Aussehen verliehen durch die Mitverwendung von Metallpigmenten in dem Überzugsmittel, das zur Herstellung der Lackierung dient. Die Grundlage der bekannten Überzugsmittel sind Kunstharzlösungen in organischen Lösungsmitteln. Da die verwendeten Metallpulver in der Regel blättchenförmig sind, gibt es bei Mitverwendung solcher Metallblättchen in derartigen Überzugsmitteln bei dem konventionellen Aufbringen des Überzugsmittels durch Spritzen oder Streichen keine glatten Oberflächen, da einzelne der Metallblättchen aus dem Film herausragen. Das führt natürlich zur Korrosionsanfälligkeit des Überzugs.

Um dies zu vermeiden und um die brennbaren organischen Lösungsmittel durch Wasser weitgehend zu ersetzen, ist in der DE-C Nr. 20 27 427 ein Verfahren zum Herstellen von Aluminiumüberzügen vorgeschlagen worden, bei den als Anode geschaltete Metallgegenstände in einem Elektrotauchbad unter Stromdurchgang beschichtet werden. Das Elektrotauchbad enthält ein Überzugsmittel auf Basis eines mit Alkali, Ammoniak und/oder wasserlöslichen Aminen neutralisierten, in Wasser gelösten oder dispergierten Bindemittelgemisches aus einem Phenolharz und einem freie Carboxylgruppen enthaltenden Copolymerisat und suspendiert darin blättchenförmiges Aluminium des Leafing-Typs. Während des Stromdurchganges wandern das Kunstharz und das Aluminium zur Anode und scheiden sich dort zu einem Überzug ab. Nach dem Herausnehmen aus dem Tauchbad werden die Überzüge eingebrannt. Der Korrosionsschutz dieser metallisch aussehenden Überzüge ist zwar gut, verschlechtert sich aber bei solchen Teilen, die als Teile von Fahrzeugen dem erhöhten Einsatzt von Streusalz auf den Straßen ausgesetzt sind, und ist nicht mehr ausreichend.

Weiterhin ist aus der DE-A1 Nr. 26 37 066 ein Zwischenprodukt bekannt, das aus einem Metallsubstrat besteht, das mit einem Aluminiumpulver enthaltenden Kunstharz beschichtet ist.

Aus der DE-PS 22 49 378 ist ein Verfahren zum Herstellen eines Gegenstandes bekannt, bestehend aus einem elektrisch leitfähigen Substrat und einem darauf festhaftend angeordneten metallisch aussehenden Überzug aus einer Metallpulver enthaltenden Kunstharzschicht, wobei die das Metallpulver enthaltende Kunstharzschicht durch kataphoretische Abscheidung von Metallpulver gemeinsam mit einem kationischen Filmbildner aus einem das Metallpulver und den Filmbildner in protonisierter Form enthaltenden wäßrigen Elektrotauchbad auf das in das Elektrotauchbad eingetauchte und als Kathode geschaltete Substrat hergestellt wird. Die Druckschrift beschreibt wärmehärtbare Überzugsmittel auf der Basis von Kombinationen von gesättigten, Oxazolingruppen tragenden Polyestern, Aminoplastharzen und ggf. weiteren Zusätzen sowie einem Lösungsmittel. Gemäß der DE-PS 22 49 378 können zur Herstellung von Lacken alle in der Lackindustrie verwendeten Pigmente, inklusive Metallpigmente, basische Pigmente, Füllstoffe, Lackhilfsmittel, etc. verwendet werden. Dieser Patentschrift liegt die Aufgabe zugrunde, bei Überzugsmitteln auf der Basis von Polyestern die Einbrenntemperatur zu senken, die Verträglichkeit der Polyester mit butylierten Aminoplastharzen zu verbessern und die Verdünnbarkeit der Harzmischungen mit aromatischen Lösungsmitteln zu verbessern. Es werden keinerlei Angaben über den Anteil der nur beiläufig erwähnten Metallpigmente gemacht.

Aus der DE-OS 27 53 595 ist ein Verfahren zur galvanischen Aufbringung eines Überzugsmittels auf ein negativ geladenes Substrat bekannt, wobei das Substrat in ein kationisches, filmbildendes Polymeres enthaltendes Bad eingetaucht wird. Die aus dieser Druckschrift bekannten Überzugsmittel können Pigmente enthalten, wobei neben Titandioxid-Pigmenten auch andere Pigmente genannt werden, z. B. Metalloxide, wie Zink- oder Eisenoxide, Metallflocken, wie Aluminiumflocken, Metallpulver und Glimmerflocken. Dem aus dieser Druckschrift bekannten Verfahren liegt die Aufgabe zugrunde, Überzüge mit einer minimalen Menge an zurückgehaltenem Wasser und zurückgehaltener Säure zu erzielen. Auch in dieser Druckschrift wird keine Angabe über die Menge an zugesetztem Metallpulver gemacht.

Der vorliegenden Erfindung liegt die Aufgabe zugrunde, einen metallisch aussehenden Überzug zu schaffen, der neben einem guten optischen Effekt einen besseren Korrosionsschutz ergibt.

Diese Aufgabe wird durch das Verfahren der eingangs genannten Art gelöst, das dadurch gekennzeichnet ist, daß in dem Elektrotauchbad ein Metall/Filmbildner-Verhältnis von 5 bis 25 Gew.-% Metall zu 75 bis 95 Gew.-% Filmbildner vorliegt und ggf. noch eine durchsichtige Überzugsschicht aufgebracht wird.

Gemäß bevorzugten Ausführungsformen besteht der Filmbildner aus einem Reaktionsprodukt von Epoxidharzen mit epoxidgruppenfreien Mannich-Basen aus äthergruppenfreien und/oder äthergruppenhaltigen kondensierten Phenolen mit mindestens zwei aromatischen Ringen und mindestens einer phenolischen Hydroxylgruppe, sekundären Aminen mit mindestens einer Hydroxylgruppe, ggf. im Gemisch mit sekundären Dialkyl- oder Dialkoxyalkylaminen ohne freie Hydroxylgruppen und Formaldehyd oder Formaldehyd abspaltende Verbindungen, wobei aliphatische Hydroxylgruppen ggf. durch Umsetzung in Urethangruppen überführt sind.

Gemäß einer anderen bevorzugten Ausführungsform besteht der Filmbildner aus einem Additionsprodukt eines primären und/oder sekundären Amins mit einem epoxidgruppenhaltigen Harz.

Eine vorteilhafte Ausführungsform sieht vor, daß die in der Kunstharzschicht enthaltenden Metallpulver aus Aluminium bestehen.

Die vorliegende Erfindung betrifft auch ein wäßriges Elektrotauchbad für das kathaphoretische Abscheiden von Überzügen auf einem leitfähigen Substrat, enthaltend einen protonisierten kationischen Filmbildner, Metallpulver und ggf. Farbpigmente und flüchtige organische Lösungs- und Verdünnungsmittel, das dadurch gekennzeichnet ist, daß das Elektrotauchbad ein Metall/Filmbildner-Verhältnis von 5 bis 25 Gew.-% Metall zu 75 bis 95 Gew.-% Filmbildner aufweist.

Die Elektrotauchbäder sind geeignet für die Verwendung zum Herstellen von Einbrennüberzügen auf der Oberfläche von als Kathode geschalteten, elektrisch leitfähigen Substraten in einem kathodischen Elektrotauchlackierverfahren.

Der durchsichtige Überzugslack wird nach den bekannten Methoden des Spritzens, Streichens oder Tauchens aufgebracht.

Die das Metallpulver enthaltende Kunstharzschicht ist in der Regel durch Einbrennen gehärtet. Insbesondere, wenn die durchsichtige Überzugsschicht naß-in-naß aufgebracht wurde, sind beide Schichten gemeinsam ohne Zwischentrocknung der metallpulverhaltigen Kunstharzschicht durch Einbrennen gehärtet.

Die mit dem Substrat verbundene gehärtete, das Metallpulver enthaltene Kunstharzschicht zeichnet sich gegenüber den aus der DE-C-2 027 427 bekannten Systemen durch verbesserte Rißbeständigkeit und hohen Glanz aus. Auch die Korrosionsbeständigkeit ist ausgezeichnet. Beschichtete Metalltafeln und beschichtete Stahlräder erreichten in der Salzsprühnebelprüfung nach DIN 50021 Korrosionsbeständigkeiten von mehr als 360 Stunden.

Der mit dem Substrat verbundene metallische Überzug läßt sich leicht aus dem das Metallpulver und den kationischen Filmbildner in protonisierter Form enthaltenden wäßrigen Elektrotauchbad herstellen. Der Überzug erfüllt sämtliche technologischen Eigenschaften, die für derartige Systeme gefordert werden, vollständig. Entscheidend für die überragend guten Ergebnisse ist die Kombination der verwendeten Metallpulver mit den protonisierten kationischen Filmbildnern.

Als Metallpulver wird vorzugsweise Aluminium vorgeschlagen. Es wird in Form von Pulver eingesetzt und ist vorzugsweise blättchenförmig oder flockenförmig. Die Oberfläche kann noch nachbehandelt sein, um besondere Aufschwimmeffekte zu erzeugen. Die bevorzugte Größe der Teilchen beträgt zwischen 5 und 50 μm. Aber auch geringe Anteile mit einer Teilchengröße von weniger als 5 μm und mehr als 50 μm sind möglich. Eingearbeitet in das Elektrotauchbad wird das Metallpulver in der Regel in Form einer Paste in Benzinkohlenwasserstoffen und anderen organischen Lösungsmitteln.

Aus der zum Stand der Technik gehörende DE-PS 2 027 427 entnimmt der Fachmann die Lehre, daß in einem elektrophoretischen Beschichtungsverfahren, das Aluminium zur Anode wandert und sich dort zusammen mit einem ebenfalls auf der Anode elektrophoretisch abscheidbaren Kunstharz abscheidet. Es war deshalb nicht vorherzusehen, daß Aluminium, das in einem Elektrotauchbad dispergiert ist, das einen protonisierten kationischen Filmbildner enthält, von diesem Filmbildner mit zur Kathode getragen wird und sich auf der Kathode abscheidet, während die Anode frei von Metallpulver bleibt.

Der metallisch aussehende Überzug ist auf einem elektrisch leitfähigen Substrat aufgebracht, z. B. auf Metallteilen aus Stahl, Aluminium, Messing, Kupfer, verzinktem und unverzinktem Eisen, und Eisenlegierungen mit anderen Metallen, die gegebenenfalls chemisch vorbehandelt, z. B. phosphatiert sind. Die Substrate können verschiedene Formen haben. Bevorzugt sind Karosseriebleche, die in der Regel zu Fahrzeugkarosserien verformt sind oder Automobilzubehörteile wie z. B. Räder.

Die Abscheidung von Kunstharzen mittels Kathaphorese auf den elektrisch leitfähigen Substrate ist bekannt. Sie werden in ein Elektrotauchbad getaucht, das einen kationisch abscheidbaren Filmbildner gelöst enthält, und als Kathode geschaltet. Solange ein Gleichstrom zwischen Kathode und Anode geschaltet ist, scheidet sich der Filmbildner als Überzug auf der Kathode ab und wird nach dem Herausnehmen aus dem Elektrotauchbad eingebrannt.

Die kationisch abscheidbaren Filmbildner sind normalerweise basische oder amphotere Homo- und/oder Copolymerisate, Polykondensate und/ oder Polyadditionsprodukte und/oder Kombinationen dieser Klassen.

Für die Herstellung und Verwendung dieser kationischen Filmbildner wird kein Schutz begehrt. Beispielsweise werden solche Produkte beschrieben in der DE-B-1 276 260 oder der französichen Patentschrift 1 313 355, der DE-A-2 252 536, der DE-A-2 320 301, der DE-A-2 357 075, der DE-A-2 541 801 und der DE-A-2 554 080. In der Regel sind alle durch Kataphorese abscheidbaren Kunstharze geeignet. Das Herstellen der wäßrigen Lösungen bzw. wäßrigen Dispersionen derartiger kationischer Harze in protonisierter Form erfolgt, beispielsweise durch Kombination mit geeigneten organischen oder anorganischen Säuren. Die protonisierten Filmbildner sind Salze. Der pH-Wert der Lösungen oder Dispersionen wird auf einen Wert zwischen 1 und 9, vorzugsweise zwischen 3 und 8,5 eingestellt. Dies ist im allgemeinen der Fall, wenn pro Basenäquivalent des kationischen Filmbildners 0,2 bis 1,5 Säureäquivalente der Säurekomponente vorliegen.

Als Säurekomponente, die bei dem kationisch abscheidbaren Filmbildner als Anion fungiert, sind praktisch alle bekannten anorganischen und/oder organischen Säuren oder Säurederivate brauchbar, so zum Beispiel Salzsäure, Schwefelsäure, Phosphorsäure, Kohlensäure, p-Toluolsulfonsäure, Essigsäure, Ameisensäure, Zitronensäure, Propionsäure, Milchsäure, Äpfelsäure, Maleinsäure, Fumarsäure sowie die Halbester der Fumarsäure, Maleinsäure und Phthalsäure mit einwertigen oder mehrwertigen aliphatischen Alkoholen, wie Methanol, Äthanol, Propanol, Äthylenglykol. Die besten Ergebnisse werden erhalten mit Essigsäure, Milchsäure und Ameisensäure, die deshalb als bevorzugt geeignete Neutralisierungsmittel vorgeschlagen werden.

In dem wäßrigen Elektrotauchbad sind die kationischen Filmbildner entweder allein vorhanden oder in Kombination mit einem geringen Teil anderer, in Wasser löslicher bzw. in Wasser dispergierbarer und im Gemisch mit den kationischen Filmbildnern kataphoretisch abscheidbarer Kunstharze. Als solche eignen sich beispielsweise Aminoplastharze, Phenoplastharze, Epoxidharze, Alkydharze, Polyurethane oder Gemische solcher Kunstharze, ferner vollblockierte bzw. verkappte Isocyanate.

Die Gewichtsmenge dieser zusätzlichen anderen Kunstharze soll zweckmäßigerweise im allgemeinen nicht größer sein als die Gewichtsmenge des protonisierten kationischen Filmbildners.

Wie in anderen Überzugsmitteln üblich, kann das Elektrotauchbad ebenfalls elektrophoretisch abscheidbare Hilfsstoffe enthalten, wie beispielsweise Farbpigmente, Füllstoffe, Härtungskatalysatoren, Mittel zur Verbesserung des Verlaufs, Antischaummittel, Haftverbesserungsmittel und andere.

Der kationische Filmbildner ist in seiner protonisierten Form als Salz mit Wasser verdünnbar. Nach Bedarf können zusätzliche Lösungsmittel, wie beispielsweise Alkohole, wie Isopropanol, Butanol, Glykole, Glykoläther, wie Äthylenglykol, Propylenglykol, Äthylenglykolmonoäthyläther, Äthylenglykolmono-propyläther, Äthylenglykolmono-butyläther oder andere wie Tetrahydrofuran, aliphatische und/oder aromatische Kohlenwasserstoffe, Ester, Äther, Ätherester und andere mitverwendet werden, um die Lösungseigenschaften und Dispergiereigenschaften der Komponenten im Elektrotauchbad günstig zu beeinflussen.

Zur Herstellung des erfindungsgemäßen Elektrotauchbades wird das Aluminium vorzugsweise als wasserdispergierbare Aluminiumpaste in Benzinkohlenwasserstoffen in dem wäßrigen protonisierten Filmbildner eindispergiert. Zur Stabilisierung dieser Dispersion können noch zusätzlich höhere Alkohole, wie z. B. Isotridezylalkohol, zugefügt werden.

Die so zubereitete Suspension wird für die kathaphoretische Beschichtung mit vollentsalztem Wasser auf einen Festkörpergehalt von 8 bis 30 % verdünnt.

Die Überzüge werden dadurch erhalten, daß das zu beschichtende Substrat unter Spannung in das Beschichtungsbad eingetaucht wird, wobei dann die kataphoretische Abscheidung des kationischen Filmbildners und des Aluminiums erfolgt.

In einer modifizierten Ausführungsform werden Überzüge auch dadurch erhalten, daß das zu beschichtende Substrat stromlos in das Beschichtungsbad eingetaucht wird und danach die kataphoretische Abscheidung des Überzuges erfolgt.

Auch ein Besprühen der zu beschichtenden Substratoberfläche mit der Badflüssigkeit des Beschichtungsbades kann stattfinden, bevor die kataphoretische Abscheidung vorgenommen wird.

Die Bedingungen für die kataphoretische Abscheidung sind die in der Praxis üblichen. Beispielsweise werden bei üblichen Gleichspannungen zwischen 2 und 500 Volt, vorzugsweise 50 bis 300 Volt und einer Temperatur, vorzugsweise zwischen 20 und 40 °C in einer Zeitspanne von 0,3 bis 5 Minuten die Überzüge abgeschieden. Je nach Art des verwendeten kationischen Filmbildners erhält man Überzüge in einer Schichtdicke von 5 bis 50 μm. Nach beendeter Beschichtung werden die beschichteten Substrate aus dem Elektrotauchbad entfernt, zweckmäßigerweise mit deionisiertem Wasser gespült und zum Härten 5 bis 180 Minuten auf Temperaturen von 80° bis 250 °C, vorzugsweise 15 bis 25 Minuten auf 170° bis 200 °C erhitzt, um eingebrannt zu werden. Hierbei sinkt bei steigender Temperatur die Einbrenndauer. Die besten Resultate werden erhalten bei Einbrenntemperaturen zwischen 120° und 200 °C und Einbrennzeiten zwischen 15 und 50 Minuten.

Die nachfolgenden Beispiele sollen die Erfindung erläutern, ohne sie einzuschränken. Darin genannte Teile sind — wenn nicht anders genannt — Gewichtsteile, Prozente sind Gewichtsprozente.

Herstellung des kationischen Filmbildners A

Es wird ein kationisches Harz nach der DE-A-2 320 301 hergestellt, das ein Mannich-Kondensationsprodukt auf der Basis eines Umsetzungsproduktes eines modifizierten Bisphenols-A-Harzes aus Formaldehyd und sekundären Aminen mit Epoxidharzen darstellt. Zu 1 100 Teilen (4,8 Mol) Bisphenol A, 917,5 Teilen (8,7 Mol) Diäthanolamin, 332,5 Teilen (2,5 Mol) Di-2-methoxyäthylamin und 375 Teilen Isopropanol werden bei 20 bis 25 °C 984 Teile (13,1 Mol) Formalin 40 %ig zugetropft. Man läßt eine Stunde bei 30 °C rühren und erhitzt dann 3 Stunden auf 80 °C. Unter schwachem Vakuum werden Isopropanol und Wasser abdestilliert. Man erhält ein Mannich-Kondensationsprodukt in Form einer gelben harzähnlichen Masse mit einem Festgehalt von 91 %.

2 542 Teile dieses Mannich-Kondensationsproduktes werden mit 70 Teilen Paraformaldehyd versetzt und 9 bis 10 Stunden bei 70 °C kondensiert. Es wird eine viskose Masse mit einem Festgehalt von 90 % erhalten. Hiervon werden 544 Teile der Mannichbase mit 136,5 Teilen eines handelsüblichen Reaktionsproduktes aus Bisphenol A und Epichlorhydrin (Epoxidwert : 0,2) und 54,5 Teilen eines handelsüblichen Reaktionsproduktes aus Pentaerythrit und Epichlorhydrin (Epoxidwert : 0,57) unter Verwendung von 34 Teilen Dimethylglykoläther 3 Stunden bei 60 °C zur Reaktion gebracht.

Man erhält ein klares viskoses Harz mit einem mittleren Molekulargewicht von 860 und einem Restformaldehydgehalt von 0,3 %. Der Festkörper beträgt 70 %.

Herstellung des kationischen Filmbildners B

Es wurde ein kataphoretisch abscheidbarer Filmbildner nach den Angaben der DE-A-2 252 536 folgendermaßen hergestellt :
100 Teile eines Polyglycidyläthers von Bisphenol A (Epoxid-Äquivalentgewicht 910, Schmelzpunkt : 96 bis 104 °C, Hydroxylwert : 0,34). werden in

367,2 Teilen N-Methylpyrrolidon und
244,8 Teilen 4-Methoxy-4-methylpentanon

gelöst und

517,0 Teilen eines teilweise verkappten Diisocyanates, hergestellt durch Umsetzen von
348,0 Teilen 2-4-Toluoldiisocyanat mit
260,5 Teilen 2-Äthylhexanol

zugefügt. Diese Mischung wird nach Zugabe von 5 Tropfen Dibutylzinndilaurat als Katalysator auf 100 °C so lange erhitzt, bis keine freien Isocyanatgruppen mehr nachweisbar sind.

Anschließend wird auf 60 °C abgekühlt und dem Ansatz werden 79,2 Teile Diäthylamin zugefügt.

Man erhitzt wiederum auf 100 °C und hält diese Temperatur während 2 Stunden. Nach dem Abkühlen erhält man ein selbstnetzendes kataphoretisch abscheidbares Polyurethanharz mit einem Festkörpergehalt von 73,5 %.

Herstellung des kationischen Filmbildners C

Es wird ein kataphoretisch abscheidbarer Filmbildner gemäß Beispiel 1 der DE-B-1 276 260 hergestellt : Eine durch Lösungspolymerisation auf übliche Weise hergestellte Lösung eines Mischpolymerisates aus

200 Teilen N-Vinylimidazol,
250 Teilen 2-Oxahexylamid der Acrylsäure,
300 Teilen 2-Äthylhexylester der Acrylsäure,
200 Teilen Styrol und
50 Teilen 4-Hydroxybutylester der Acrylsäure in
1000 Teilen Butanol

wird mit Essigsäure bis zu einem pH-Wert von 6,2 neutralisiert. Der Festkörpergehalt beträgt ca. 50 %.

Beispiel 1

Zur Herstellung eines Beschichtungsbades werden 695 Gewichtsteile des kataphoretisch abscheidbaren Filmbildners A mit 6,5 Gewichtsteilen 90 %iger Essigsäure neutralisiert und mit 155 Gewichtsteilen deionisiertem Wasser intensiv vermischt. Danach werden unter Rühren 144 Gewichtsteile einer Aluminium-Paste zugegeben. Die Aluminiumpaste setzt sich zusammen aus 50 Teilen Aluminium in Blättchenform mit einer durchschnittlichen Blättchengröße von 7 µm.

25 Teilen Benzin und 60 Teilen Isotridecylalkohol. Die Mischung wird mit deionisiertem Wasser auf einen Festkörpergehalt von 12 Gewichtsprozent verdünnt. Der pH-Wert des verdünnten Beschichtungsbades beträgt 7,8. In dieses wird als Kathode ein zinkphosphatiertes Stahlblech eingetaucht. Dann wird 2 Minuten lang bei einer Gleichspannung von 100 Volt beschichtet. Das Beschichtungsbad wird während der Abscheidung auf einer Temperatur von 25 °C gehalten. Anschließend wird die beschichtete Kathode aus dem Beschichtungsbad genommen, mit deionisiertem Wasser gespült und mit Luft abgeblasen. Danach wird das Blech 20 Minuten bei 170 °C eingebrannt. Der eingebrannte Überzug auf dem zinkphosphatierten Stahlblech hat eine Schichtdicke zwischen 16 und 19 µm. Das zinkphosphatierte Stahlblech besaß eine Zinkphosphatschicht von ca. 2 g/m².

Es wurde ein harter, griffester, metallisch aussehender Überzug erhalten, der in der Salzsprühnebelprüfung nach DIN 50021 nach 360 Stunden noch einwandfrei war. Die Unterwanderung am Schnitt nach DIN 53167 betrug 1,0 mm ; der Flächenrost nach DIN 53210 hatte die Note 1 ebenso der Kantenrost nach DIN 53210.

Beispiel 2

Es wird folgendes Beschichtungsbad hergestellt :

Zu 280 Teilen des kationischen Filmbildners B (mit 73,5 % Festkörpergehalt) werden
4 Teile Dibutylzinndilaurat als Katalysator zugefügt und anschließend mit
15 Teilen Eisessig versetzt.

Dieser Mischung werden 35 Teile einer Aluminiumpaste zugemischt, die aus 50 Teilen blättchenförmiges Aluminium mit einer durchschnittlichen Blättchengröße zwischen 5 und 10 µm und 25 Teilen Testbenzin-Xylol-Gemisch (1 : 1) besteht, und mit deionisiertem Wasser in üblicher Weise auf einen Festkörpergehalt von 16 % verdünnt. Der pH-Wert des Bades liegt bei 6,2.

Mit dem Beschichtungsbad wird kathodisch beschichtet. Es wird 90 Sekunden bei einer Gleichspannung von 250 Volt abgeschieden. Nach dem Herausnehmen aus dem Bad wird mit deionisiertem Wasser gespült und mit Luft abgeblasen. Dann wird der Überzug 10 Minuten bei 177 °C eingebrannt. Die Schichtdicken betrugen 17 μm. Der Film hatte eine Bleistifthärte von 4 H. Die erhaltenen Unterrostungswerte entsprechen den nach Beispiel 1 erhaltenen Werte.

Beispiel 3

Zu

300 Teilen des kationischen Filmbildners C (Festkörpergehalt 50 %) werden
70 Teile einer Aluminiumpaste, bestehend aus :
30 Teilen Aluminium mit einer durchschnittlichen Korngröße von 7 μm.
15 Teilen Benzin und
25 Teilen Butylglykol

zugemischt.

Mit deionisiertem Wasser wird in üblicher Weise auf einen Festkörpergehalt von 10 % verdünnt. Der pH-Wert des Bades wird mit Essigsäure auf pH 6,2 nachgestellt.

Mit diesem Beschichtungsbad wird
a. ein entfettetes Stahlblech
b. ein zinkphosphatiertes Stahlblech
kataphoretisch beschichtet.

Es wird 1 Minute bei einer Gleichspannung von 120 Volt abgeschieden. Nach dem Herausnehmen aus dem Bad wird mit deionisiertem Wasser abgespült und mit Luft abgeblasen. Dann wird der Überzug 20 Minuten bei 170 °C eingebrannt. Die Schichtdicken betrugen bei a. 22 μm und bei b. 16 μm.

Es wird ein metallisch aussehender Überzug erhalten, der dem Beispiel 1 entsprechende analoge Werte für die Unterrostung nach DIN 50021 aufweist.

**Patentansprüche**

1. Verfahren zum Herstellen eines Gegenstandes bestehend aus einem elektrisch leitfähigen Substrat und einem darauf festhaftend angeordneten metallisch aussehenden Überzug aus einer Metallpulver enthaltenden Kunstharzschicht, wobei die das Metallpulver enthaltende Kunstharzschicht durch kataphoretische Abscheidung von Metallpulver gemeinsam mit einem kationischen Filmbildner aus einem das Metallpulver und den Filmbildner in protonisierter Form enthaltenden wäßrigen Elektrotauchbad auf das in das Elektrotauchbad eingetauchte und als Kathode geschaltete Substrat hergestellt wird, dadurch gekennzeichnet, daß in dem Elektrotauchbad ein Metall/Filmbildner-Verhältnis von 5 bis 25 Gew.-% Metall zu 75 bis 95 Gew.-% Filmbildner vorliegt und ggf. noch eine durchsichtige Überzugsschicht aufgebracht wird.

2. Nach dem Verfahren gemäss Anspruch 1 hergestellter Gegenstand bestehend aus einem elektrisch leitfähigen Substrat und einem darauf festhaftend angeordneten, metallisch aussehenden Überzug, dadurch gekennzeichnet, dass der Filmbildner ein Reaktionsprodukt von Epoxidharzen mit epoxidgruppenfreien Mannich-Basen aus äthergruppenfreien und/oder äthergruppenhaltigen kondensierten Phenolen mit mindestens zwei aromatischen Ringen und mindestens einer phenolischen Hydroxylgruppe, sekundären Aminen mit mindestens einer Hydroxylgruppe und Formaldehyd und/oder Formaldehyd abspaltende Verbindungen ist.

3. Nach dem Verfahren gemäss Anspruch 1 hergestellter Gegenstand, dadurch gekennzeichnet, dass der Filmbildner ein Reaktionsprodukt von Epoxidharzen mit exposidgruppenfreien Mannich-Basen aus äthergruppenfreien und/oder äthergruppenhaltigen kondensierten Phenolen mit mindestens zwei aromatischen Ringen und mindestens einer phenolischen Hydroxylgruppe, sekundären Aminen mit mindestens einer Hydroxylgruppe, sekundären Aminen mit mindestens einer Hydroxylgruppe im Gemisch mit sekundären Dialkyl- oder Dialkoxyalkylaminen ohne freie Hydroxylgruppen und Formaldehyd und/oder Formaldehyd abspaltende Verbindungen ist.

4. Nach dem Verfahren gemäss Anspruch 1 hergestellter Gegenstand, dadurch gekennzeichnet, dass der Filmbildner ein Reaktionsprodukt von Epoxidharzen mit epoxidgruppenfreien Mannich-Basen aus äthergruppenfreien und/oder äthergruppenhaltigen kondensierten Phenolen mit mindestens zwei aromatischen Ringen und mindestens einer phenolischen Hydroxylgruppe, sekundären Aminen mit mindestens einer Hydroxylgruppe und Formaldehyd und/oder Formaldehyd abspaltende Verbindungen, wobei aliphatische Hydroxylgruppen durch Umsetzung mit teilblokierten Isocyanaten mindestens teilweise in Urethangruppen überführt sind, ist.

5. Nach dem Verfahren gemäss Anspruch 1 hergestellter Gegenstand, dadurch gekennzeichnet, dass der Filmbildner ein Reaktionsprodukt von Epoxidharzen mit epoxidgruppenfreien Mannich-Basen aus äthergruppenfreien und/oder äthergruppenhaltigen kondensierten Phenolen mit mindestens zwei aromatischen Ringen und mindestens einer phenolischen Hydroxylgruppe, sekundären Aminen mit mindestens einer Hydroxylgruppe im Gemisch mit sekundären Dialkyl- oder Dialkoxyalkylaminen ohne freie Hydroxylgruppen und Formaldehyd und/oder Formaldehyd abspaltende Verbindungen, wobei aliphatische Hydroxylgruppen durch Umsetzung mit teilbockierten Isocyanaten mindestens teilweise in Urethangruppen überführt sind, ist.

6. Nach dem Verfahren gemäss Anspruch 1 hergestellter Gegenstand nach den Ansprüchen 2 bis 5, dadurch gekennzeichnet, dass der Filmbildner zusätzlich eine niedermolekulare Epo-

xidverbindung mit mindestens einer Epoxid-gruppe je Molekül und einem Epoxidäquivalent von 80 bis 1 200 und/oder blockierte Isocyanate mit einem Molekulargewicht unter 2 000 enthält.

7. Nach dem Verfahren gemäss Anspruch 1 hergestellter Gegenstand, dadurch gekennzeichnet, dass der Filmbildner das Additionsprodukt eines primären und/oder sekundären Amins mit einem epoxidgruppenhaltigen Harz ist.

8. Nach dem Verfahren gemäss Anspruch 1 hergestellter Gegenstand nach den Ansprüchen 2 bis 7, dadurch gekennzeichnet, dass das in der Kunstharzschicht enthaltene Metallpulver aus Aluminium besteht.

9. Wäßriges Elektrotauchbad für das kataphoretische Abscheiden von metallisch aussehenden Überzügen auf einem leitfähigen Substrat, enthaltend einen protonisierten kationischen Filmbildner, Metallpulver und ggf. Farbpigmente und flüchtige organische Lösungs- und Verdünnungsmittel, dadurch gekennzeichnet, daß das Elektrotauchbad ein Metall/Filmbildner-Verhältnis von 5 bis 25 Gew.-% Metall zu 75 bis 95 Gew.-% Filmbildner aufweist.

**Claims**

1. Process for the production of an article consisting of an electrically conductive substrate and a coating which is firmly bonded to the said substrate, has a metallic appearance and consists of a synthetic resin layer containing metal powder, the synthetic resin layer containing the metal powder being prepared by cataphoretic deposition of metal powder together with a cationic film former from an aqueous electrocoating bath containing the metal powder and the film former in protonized form onto the substrate which has been immersed in the electrocoating bath and made the cathode, characterized in that the metal/film former ratio in the electrocoating bath is 5 to 25 % by weight of metal to 75 to 95 % by weight of film former, and, if appropriate, a further transparent coating is applied.

2. Article produced according to the process as claimed in claim 1, consisting of an electrically conductive substrate bearing a firmly adhering coating having a metallic appearance, characterized in that the film-forming agent is a reaction product of epoxide resins with Mannich bases which are free from epoxide groups and have been produced from condensed phenols free from ether groups and/or condensed phenols containing ether groups, the phenols possessing at least two aromatic rings and at least one phenolic hydroxyl group, secondary amines possessing at least one hydroxyl group, and formaldehyde and/or compounds splitting off formaldehyde.

3. Article produced according to the process as claimed in claim 1, characterized in that the film-forming agent is a reaction product of epoxide resins with Mannich bases which are free from epoxide groups and have been produced from condensed phenols free from ether groups and/or condensed phenols containing ether groups, the phenols possessing at least two aromatic rings and a least one phenolic hydroxyl group, secondary amines possessing at least one hydroxyl group, mixed with secondary dialkylamines or dialkoxyalkylamines without free hydroxyl groups, and formaldehyde and/or compounds splitting off formaldehyde.

4. Article produced according to the process as claimed in claim 1, characterized in that the film-forming agent is a reaction product of epoxide resins with Mannich bases which are free from epoxide groups and have been produced from condensed phenols free from ether groups and/or condensed phenols containing ether groups, the phenols possessing at least two aromatic rings and at least one phenolic hydroxyl group, secondary amines possessing at least one hydroxyl group, and formaldehyde and/or compounds splitting off formaldehyd, aliphatic hydroxyl groups beeing converted, at least partially, to urethane groups by reaction with partially blocked isocyanates.

5. Article produced according to the process as claimed in claim 1, characterized in that the film-forming agent is a reaction product of epoxide resins with Mannich bases which are free from epoxide groups and have been produced from condensed phenols free from ether groups and/or condensed phenols containing ether groups, the phenols possessing at least two aromatic rings and at least one phenolic hydroxyl group, secondary amines possessing at least one hydroxyl group, mixed with secondary dialkylamines or dialkoxyalkylamines without free hydroxyl groups, and formaldehyde and/or compounds splitting off formaldehyde, aliphatic hydroxyl groups being converted, at least partially, to urethane groups by reaction with partially blocked isocyanates.

6. Article according to claims 2 to 5 produced according to the process as claimed in claim 1, characterized in that the film-forming agent additionally contains a low-molecular epoxide compound containing at least one epoxide group per molecule and having an epoxide equivalent of 80 to 1 200 and/or blocked isocyanates having a molecular weight of less than 2 000.

7. Article produced according to the process as claimed in claim 1, characterized in that the film-forming agent is the addition product of a primary and/or secondary amine with a resin containing epoxide groups.

8. Article according to claims 2 to 7 produced according to the process as claimed in claim 1, characterized in that the metal powder contained in the synthetic resin layer consists of aluminium.

9. Aqueous electrocoating bath for the cataphoretic deposition of coatings having a metallic appearance onto a conductive substrate, containing a protonized cationic film former, metal powder and, if appropriate, coloured pigments and volatile organic solvents and diluents, characterized in that the electrocoating bath has a metal/film former ratio of 5 to 25 % by weight of metal to 75 to 95 % by weight of film former.

## Revendications

1. Procédé de fabrication d'un produit composé d'un substrat électroconducteur et d'un revêtement d'apparence métallique adhérant solidement au substrat et formé d'une couche de résine synthétique contenant de la poudre métallique, la couche de résine synthétique qui contient la poudre métallique étant réalisée par dépôt cataphorétique de poudre métallique en même temps que d'un filmogène cationique, en partant d'un bain électrophorétique aqueux contenant la poudre métallique et le filmogène sous forme protonisée, sur le substrat plongé dans le bain électrophorétique et connecté comme cathode, caractérisé par le fait que dans le bain électrophorétique, il existe un rapport métal/filmogène de 5 à 25 % en poids de métal pour 75 à 95 % en poids de filmogène et qu'éventuellement, on applique encore une couche de revêtement transparente.

2. Produit fabriqué par le procédé selon la revendication 1, composé d'un substrat électroconducteur et d'un revêtement d'apparence métallique adhérant solidement au substrat, caractérisé par le fait que le filmogène est un produit de réaction de résines d'époxyde sur des bases de Mannich exemptes de groupes époxyde et tirées de phénols condensés exempts de groupes éther et/ou contenant des groupes éther et contenant au moins deux noyaux aromatiques et au moins un groupe hydroxyle phénolique, d'amines secondaires contenant au moins un groupe hydroxyle et de formaldéhyde et/ou de composés libérant du formaldéhyde.

3. Produit fabriqué par le procédé selon la revendication 1, caractérisé par le fait que le filmogène est un produit de réaction de résines d'époxyde sur des bases de Mannich exemptes de groupes époxyde et tirées de phénols condensés exempts de groupes éther et/ou contenant des groupes éther et contenant au moins deux noyaux aromatiques et au moins un groupe hydroxyle phénolique, d'amines secondaires contenant au moins un groupe hydroxyle en mélange avec des dialkyl- ou bis-alcoxyalkyl-amines secondaires sans groupes hydroxyle libres et de formaldéhyde et/ou de composés libérant du formaldéhyde.

4. Produit fabriqué par le procédé selon la revendication 1, caractérisé par le fait que le filmogène est un produit de réaction de résines d'époxyde sur des bases de Mannich exemptes de groupes époxyde et tirées de phénols condensés exempts de groupes éther et/ou contenant des groupes éther et contenant au moins deux noyaux aromatiques et au moins un groupe hydroxyle phénolique, d'amines secondaires contenant au moins un groupe hydroxyle et le formaldéhyde et/ou de composés libérant du formaldéhyde, des groupes hydroxyle aliphatiques étant convertis au moins partiellement en groupe uréthanne par réaction sur des isocyanates partiellement bloqués.

5. Produit fabriqué par le procédé selon la revendication 1, caractérisé par le fait que le filmogène est un produit de réaction de résines d'époxyde sur des bases de Mannich exemptes de groupes époxyde et tirées de phénols condensés exempts de groupes éther et/ou contenant des groupes éther et contenant au moins deux noyaux aromatiques et au moins un groupe hydroxyle phénolique, d'amines secondaires contenant au moins un groupe hydroxyle en mélange avec des dialkyl- ou bis-alcoxyalkyl-amines secondaires sans groupes hydroxyle libres et de formaldéhyde et/ou de composés libérant du formaldéhyde, des groupes hydroxyle aliphatiques étant convertis au moins partiellement en groupes uréthanne par réaction sur des isocyanates partiellement bloqués.

6. Produit selon l'une des revendications 2 à 5, fabriqué par le procédé selon la revendication 1 et caractérisé par le fait que le filmogène contient en outre un composé époxydé à bas poids moléculaire contenant au moins un groupe époxyde par molécule et ayant un équivalent époxyde de 80 à 1 200 et/ou des isocyanates bloqués ayant un poids moléculaire inférieur à 2 000.

7. Produit fabriqué par le procédé selon la revendication 1, caractérisé par le fait que le filmogène est le produit d'addition d'une amine primaire et/ou secondaire et d'une résine contenant des groupes époxyde.

8. Produit selon l'une des revendications 2 à 7, fabriqué par le procédé selon la revendication 1 et caractérisé par le fait que la poudre métallique contenue dans la couche de résine synthétique est formée d'aluminium.

9. Bain électrophorétique aqueux pour le dépôt cataphorétique de revêtements d'apparence métallique sur un substrat électroconducteur, contenant un filmogène cationique protonisé, de la poudre métallique et éventuellement des pigments colorés et des solvants et diluants organiques volatils, caractérisé par le fait que le bain d'électrophorèse présente un rapport métal/filmogène de 5 à 25 % en poids de métal pour 75 à 95 % en poids de filmogène.